# EUROPEAN PATENT SPECIFICATION

(11) **EP 0 907 426 B1**
(45) Date of publication and mention of the grant of the patent: **08.03.2000**
(21) Application number: 97923219.6
(22) Date of filing: 21.05.1997
(51) Int. Cl.: B07B 1/52, B07B 1/15, A01D 17/06

(54) **AGRICULTURAL SEPARATING DEVICE AND STARWHEEL SCRAPERS**
LANDWIRTSCHAFTLICHE SORTIERVORRICHTUNG UND ROLLENSCHABER
SEPARATEUR AGRICOLE ET RACLEURS A ROUES EN ETOILES

(30) Priority: 22.05.1996 GB 9610732
(43) Date of publication of application: 14.04.1999
(73) Proprietor: RICHARD PEARSON LIMITED, Boston, Lincolnshire PE22 0JZ (GB)
(72) Inventor: WESTON, David Booth, Richard Pearson Limited, Boston, Lincolnshire PE22 0JZ (GB)
(74) Representative: Devons, David Jon
(86) International application number: GB9701387
(87) International publication number: WO9744143

(56) References cited:
- EP-A- 0 410 808
- DE-B- 1 169 766
- DE-C- 566 682
- GB-A- 2 292 874

## Description

The present invention relates to an agricultural separating device incorporating starwheels, eg a root-crop harvester, particularly a potato harvester, and also relates to starwheel scrapers.

Harvesters are known comprising rotatable members having a plurality of "starwheels" each having a plurality of outwardly extending resiliently deformable projections or "fingers". Such rotatable members are commonly referred to as "starshafts".

GB 2 145 612B discloses a harvester having two rotatable members or "starshafts" upstream of a contra-rotating clod roller. In use crop, eg potatoes, is carried over the starshafts and clod and/or stones fall down therebetween. The potatoes, remaining clod and stones are then fed to the clod roller and, owing to the deformability of the starwheel fingers, most of the remaining clod and smaller stones are drawn between the contra-rotating starshafts and adjacent clod roller.

In practice two starshafts are required with the starwheels of the starshafts staggered and interleaving, so as to provide a mutual self-cleaning action thereof and preventing a build-up of material between the starwheels. Harvesters are also known in which a conveying surface is formed from a plurality of starshafts and clod rollers, two starshafts being provided adjacent each clod roller arranged immediately downstream of the two starshafts.

Starwheels wear out and therefore the provision of two starshafts adjacent each clod roller involves considerable expense in replacing the starwheels of each pair of starshafts.

An object of the present invention is to provide an agricultural separating device in which the replacement of starwheels is reduced.

The present invention provides an agricultural separating device as claimed in Claim 1.

The provision of only one starshaft for each clod roller not only halves the cost of replacement starwheels, but also reduces the overall length of the harvester. Furthermore, such a harvester has fewer components and requires less power to operate.

Any form of known starwheel scraper may be used.

Starwheel scrapers are commonly used having a hub portion fitting loosely around the axially extending hub of a starwheel and a straight finger portion extending away from the hub portion. In one form of known scraper formed from bent rod, the finger extends tangentially away from the hub portion, and the scraper is known as a "P"-scraper. Alternatively, the finger may extend normally away from the hub portion so that the scraper has a shape similar to a hand mirror or magnifying glass.

Although known scrapers perform their task of cleaning the soil adhering to the starwheels well, they are subject to considerable wear and tear and frequently become bent, and thereby cease to operate satisfactorily.
(see for example DE-C-566 682)

A further object of the invention is to provide a starwheel scraper which in use is subject to less wear and tear than, but performs just as well as, known scrapers.

The invention also provides a starwheel scraper as claimed in Claim 5.

As a result of the convex surface of increasing radius of curvature, the scraper exerts a gradually increasing pressure on the soil adhering between adjacent starwheels, as the starwheels rotate, so that wear and tear on the scraper is considerably less. Thus, the life of starwheel scrapers according to the invention is significantly longer than that of conventional starwheel scrapers.

If the starwheel scraper is moulded from plastics material, eg nylon, it may be manufactured easily, eg by injection moulding.

Although the separating device in accordance with the invention may be provided with known starwheel scrapers, it is preferably provided with starwheel scrapers in accordance with the invention.

Embodiments of the invention will now be described with reference to the accompanying drawings, wherein:
Figure 1 is a diagrammatic side view of a separating device in accordance with the invention,
Figures 2 and 3 are side views of known starwheel scrapers suitable for use with the separating device of Figure 1,
Figure 4 is a side view of a starwheel scraper in accordance with the invention,
Figure 5 is a front view of the scraper of Figure 4,
Figure 6 is a side view of the scraper of Figure 4 mounted on a rotatable member, and
Figure 7 is a side view of a further starwheel scraper in accordance with the invention.

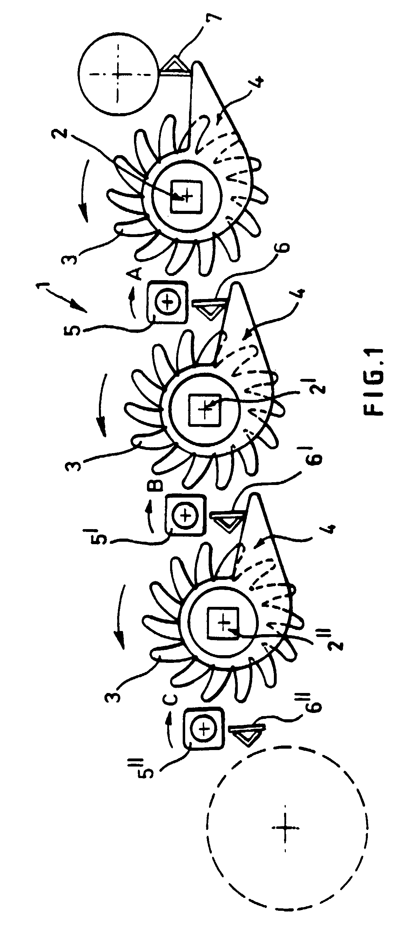

In Figure 1, the crop conveying surface 1 of an agricultural separating device, eg a potato harvester, has three spaced rotatable members ("starshafts") 2, 2¹ and 2¹¹ each carrying axially spaced starwheels 3 and scrapers 4, to be described below. Contra-rotating clod rollers 5, 5¹ and 5¹¹ are arranged between the starshafts 2, 2¹ and 2¹¹ and downstream thereof, respectively. Each clod roller 5, 5¹ and 5¹¹ has a respective clod roller scraper 6, 6¹ and 6¹¹. As can be seen from Figure 1, the clod roller scrapers 6 and 6¹ act as stops for the scrapers 4 of the starshafts 2¹ and 2¹¹, respectively. Thus, if a lump of material clinging to the starwheels 3 is not removed by the scraper 4 hanging downwardly, the scrapers are carried clockwise until they strike against the clod roller scrapers 6 and 6¹, respectively, and further rotation of the starwheels 3 in the anticlockwise direction results in a scraping away of the material from the starwheels 3 by the scrapers 4. A clod roller scraper 7 up-stream of the starshaft 2 similarly acts as a rotation limiter of the scraper 4 of starshaft 2.

As can be seen from Figure 1 transverse lines of nip-points A, B and C extend between the starshafts 2, 2¹ and 2¹¹ and the respective contra-rotating clod rollers 5, 5¹ and 5¹¹. It is the line of nip-points which provides the separation of clods from potatoes in a potato harvester, there being one line of nip-points for every starshaft 2, 2¹, 2¹¹, whereas in harvesters not using starwheel scrapers, pairs of adjacent interleaving starshafts have to be provided up-stream of each contra-rotating clod roller to provide self-cleaning of the starwheels. Thus, for harvesters not having starwheel scrapers two rows of starshafts have to be provided for each line of nip-points, whereas for a harvester in which the starwheels have starwheel scrapers only one starshaft is required for each line of nip-points.

Therefore, the number of starwheels required is half that required for the same number of nip-points when starwheel scrapers are used, resulting in lower starwheel replacement costs, lower power requirements for the harvester, fewer components and a shorter harvester.

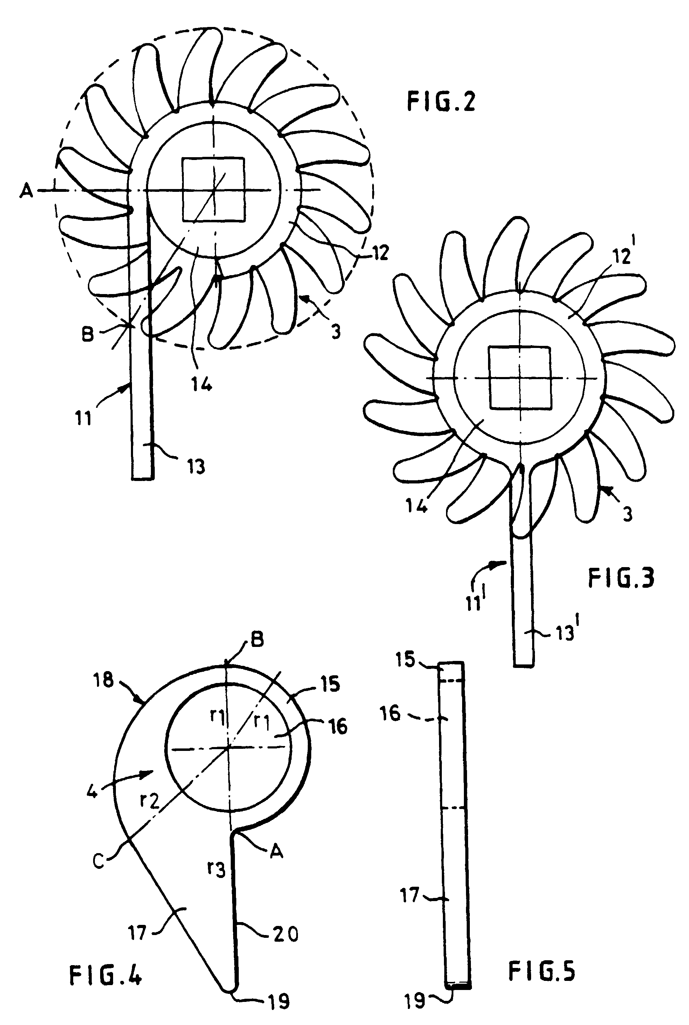

In Figures 2 and 3 known starwheel scrapers are shown. In Figure 2 the scraper 11 is known as a "P"-scraper and is formed from bent metal rod to form a circular hub portion 12 and a tangentially-extending finger 13. The hub portion 12 fits loosely around a laterally-extending hub 14 of the starwheel 3. The scraping action begins at a circumferential point A and ceases at point B, ie the scraping action extends over an arc of about 60°.

In Figure 3 the scraper 11¹ has a "closed" hub portion 12¹ and a radially-extending finger 13¹. Here, the scraping action is very rough and is effectively over an arc of only a few degrees.

The known starwheel scrapers may be used with the crop conveying surface 1 of Figure 1.

Figures 4, 5 and 6 show an improved starwheel scraper 4 in accordance with the invention. In these Figures the starwheel scraper 4 is formed from plastics material, eg injection-moulded nylon, and has a hub portion 15 with an aperture 16 therethrough and a finger 17 extending away from the hub portion 15.

As can be seen from Figure 4, the scraper 4 has an outline somewhat similar to a "P"-scraper, but has an outwardly convex surface 18 with an increasing radius of curvature centred on the aperture 16. Beginning at a point A on the hub portion 15, the radius of curvature is constant for approximately 180° in an anticlockwise direction to a point B. For approximately a further 120° from point B to point C the radius of curvature of the hub portion 15 increases from r₁ to r₂. Thereafter, the outer surface of the scraper extends linearly along the finger 17 to the end 19. As can be seen from Figure 4, the inner surface 20 of the finger 17 extends radially from the aperture 16 with a radius r₃ substantially larger than r₂.

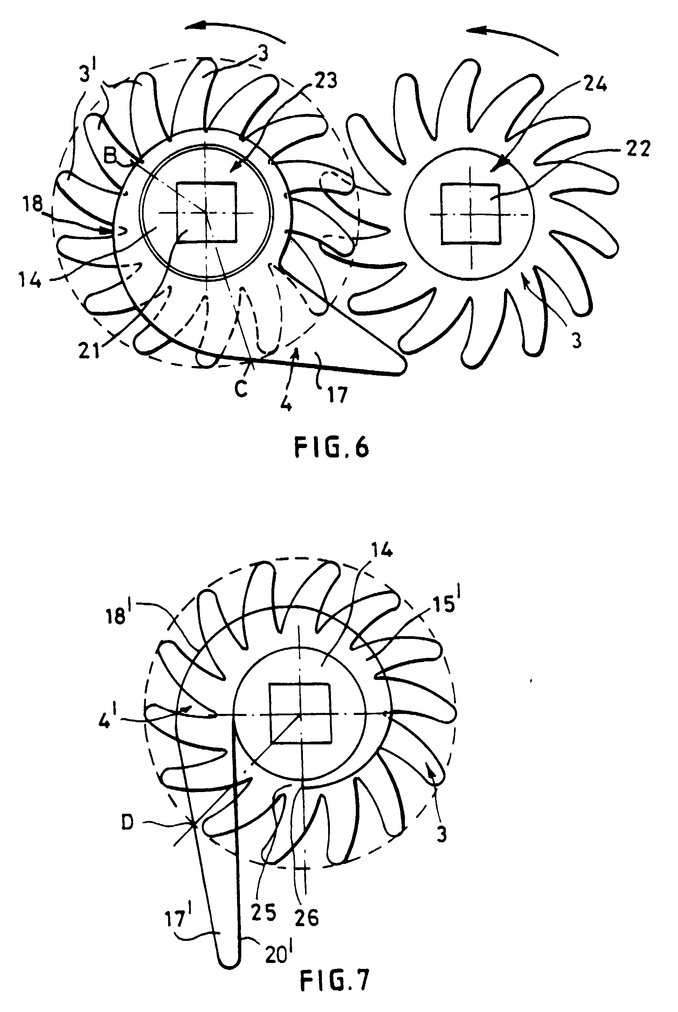

Figure 6 shows in side view part of an agricultural machine, eg a harvester or stone and clod separator ( a destoner) having two rotatable members comprising a plurality of starwheels 3 mounted on respective shafts 21, 22 of starshafts 23, 24 for rotation therewith. In Figure 6 the starwheels 3 interleave, and this provides a degree of self cleaning of the starwheels. However, if the starwheels are spaced so that they do not interleave (eg in the lifting conveyor and agricultural separator of EP 0 410 808B1), under certain soil conditions, if starwheel scrapers are not provided, the starwheels may become gummed up.

It can be seen from Figure 6 that, as the starwheel 3 rotates in an anticlockwise direction, the separate fingers 3¹ of the starwheel 3 move past the convex outer surface 18 of the scraper 4 having a gradually increasing radius from point B to point C, ie over an arc of about 145°, after which the starwheel fingers 3¹ move behind the scraper finger 17. The gradual increase in radius of the outwardly convex surface 18 over an arc of about 145° produces a gradual scraping action over a longer period of time on material between starwheels 3, with a consequent reduction of pressure on the scraper and hence a reduction in wear and tear thereof.

The starwheel scraper 4¹ of Figure 7 differs from that of Figures 4-6 mainly by the fact that the hub portion 15¹ has a gap 25 over about 90° of the circumference and begins at a hub end 26. The hub end 26 acts as a scraper for material adhering to the starwheel hub 14, and the gap 25 allows scraped material to fall away.

Furthermore, the curvature of the outwardly convex surface 18¹ is not so pronounced as in the scraper 4 of Figures 4-6, and the inner surface 20¹ of the finger 17¹ is tangential, not radial, to the hub 14 of the starwheel 3. The radius of the convex surface increases gradually from the hub end 26 to a point D, where the ends of the starwheel fingers "disappear" behind the scraper finger 17¹, ie over a circumferential arc of about 315°. This produces a very gradual scraping action with consequent lower wear and tear of the scrapers.

## Claims

1. An agricultural separating device comprising a single rotatable member (2) having a plurality of starwheels (3) mounted on a rotatable shaft, a contra-rotating clod roller (5) arranged parallel to and spaced from the single rotatable member (2) to provide a nip line (A) between the clod roller (5) and the rotatable member (2) for separating out material, and starwheel scrapers (4) provided on the starwheels (3).

2. An agricultural separating device as claimed in Claim 1, wherein there are a plurality of groups of the said single rotatable member (2, 2¹, 2¹¹) and respective said clod roller (5, 5¹, 5¹¹) arranged parallel to each other to form a conveying and separating surface (Fig. 1).

3. An agricultural separating device as claimed in Claim 2, wherein stop means (7, 6, 6¹) are provided to limit rotation of the starwheel scrapers (4).

4. An agricultural separating device as claimed in Claim 3, wherein each clod roller (5, 5¹, 5¹¹) is provided with a clod roller scraper as the said stop means.

5. A starwheel scraper (4) having a hub portion (15) with an aperture (16) therethrough, whereby the scraper may be loosely mounted on the hub (12) of a starwheel (3), and a finger (17) extending away from the hub portion (15), wherein the scraper (4) has an outwardly convex surface (18) with a radius of curvature (r₁, r₂, r₃) centred on the aperture (16) and increasing in a direction around the aperture (16) towards the finger (17) so that, in use, the scraper (4) exerts a gradually increasing pressure on material adhering to the starwheel (3).

6. A starwheel scraper as claimed in Claim 5 and formed from moulded plastics material.

7. A starwheel scraper as claimed in Claim 5 or 6, wherein the hub portion (15) has a substantially constant diameter for substantially 180° of its circumference (A B), whereafter the radius of the convex surface increases for substantially a further substantially 120° (B C) and thereafter the outer surface of the finger extends substantially linearly away from the hub portion (15) for the remaining substantially 60° (C A) of circumference of the hub portion (15).

8. A starwheel scraper as claimed in any one of Claims 5 to 7, wherein the inner surface (20) of the finger (17) extends substantially radially of the hub portion (15).

9. A starwheel scraper as claimed in Claim 5 or 6, wherein the hub portion (15¹) has a peripheral gap (25), so that an end (26) of the hub portion acts, in use, as a scraper of the hub portion (14) of the starwheel (3) on which it is mounted.

10. A starwheel scraper as claimed in Claim 10, wherein the convex surface (18¹) begins at the said end (26) of the hub portion (15¹) and the radius of the convex surface (18¹) increases from the said end (26) for at least substantially 270° (D) and thereafter the finger (17¹) extends substantially linearly away from the hub portion.

11. A starwheel scraper as claimed in Claim 9 or 10, wherein the inner surface (20¹) of the finger (17¹) extends substantially tangentially to the hub portion (15¹).

12. An agricultural separating device as claimed in any one of Claims 1 to 4, wherein the starwheel scrapers (4) are as claimed in any one of Claims 5 to 11.

13. A harvester comprising an agricultural separating device as claimed in any one of Claims 1 to 4 or Claim 12.

## Patentansprüche

1. Landwirtschaftliche Trenn- oder Sortiervorrichtung, die folgende Komponenten aufweist: ein einzelnes drehbares Element (2), das eine Vielzahl von Sternrädern (3) hat, die auf einer drehbaren Welle angebracht sind, eine gegenläufige Klumpenwalze (5), die parallel und mit Zwischenraum zu dem einzelnen drehbaren Element (2) angeordnet ist, um eine Klemmlinie (A) zwischen der Klumpenwalze (5) und dem drehbaren Element (2) zu bilden, um das Material auszusortieren, und Sternradabstreifer (4), die an den Sternrädern (3) bereitgestellt werden.

2. Landwirtschaftliche Sortiervorrichtung nach Anspruch 1, bei der eine Vielzahl von Gruppen der einzelnen drehbaren Elemente (2, 2', 2") und der entsprechenden Klumpenwalzen (5, 5', 5") parallel zueinander angeordnet ist, um eine Förder- und Sortierfläche zu bilden (Fig. 1).

3. Landwirtschaftliche Sortiervorrichtung nach Anspruch 2, bei der Anschlagmittel (7, 6, 6') bereitgestellt werden, um die Drehung der Sternradabstreifer (4) zu begrenzen.

4. Landwirtschaftliche Sortiervorrichtung nach Anspruch 3, bei der jede Klumpenwalze (5, 5', 5") mit einem Klumpenwalzenabstreifer als dem Anschlagmittel versehen ist.

5. Sternradabstreifer (4), der einen Nabenabschnitt (15) mit einer durchführenden Öffnung (16), wodurch der Abstreifer lose auf der Nabe (12) eines Sternrades (3) angebracht werden kann, und einen Finger (17) hat, der von dem Nabenabschnitt (15) weg führt, worin der Abstreifer (4) eine nach außen konvexe Oberfläche (18) mit einem Krümmungsradius (r₁, r₂, r₃) hat, der auf der Öffnung (16) zentriert ist und in einer Richtung um die Öffnung (16) zu dem Finger (17) hin zunimmt, so daß der Abstreifer (4) beim Einsatz einen allmählich zunehmenden Druck auf Material ausübt, das an dem Sternrad (3) haftet.

6. Sternradabstreifer nach Anspruch 5 und hergestellt aus Kunstharzpreßstoff.

7. Sternradabstreifer nach Anspruch 5 oder 6, bei dem der Nabenabschnitt (15) über im wesentlichen 180° seines Umfangs (AB) einen im wesentlichen konstanten Durchmesser hat, worauf der Radius der konvexen Oberfläche über im wesentlichen weitere 120° (BC) zunimmt und anschließend über die verbleibenden im wesentlichen 60° (CA) des Umfangs des Nabenabschnitts (15) die Außenfläche des Fingers im wesentlichen linear von dem Nabenabschnitt (15) weg führt.

8. Sternradabstreifer nach einem der Ansprüche 5 bis 7, bei dem die Innenfläche (20) des Fingers (17) im wesentlichen radial zu dem Nabenabschnitt (15) verläuft.

9. Sternradabstreifer nach Anspruch 5 oder 6, bei dem der Nabenabschnitt (15') einen Umfangsspalt (25) hat, so daß beim Einsatz ein Ende (26) des Nabenabschnitts als Abstreifer des Nabenabschnitts (14) des Sternrades (3) wirkt, auf dem dieser angebracht ist.

10. Sternradabstreifer nach Anspruch 10, bei dem die konvexe Oberfläche (18') an dem Ende (26) des Nabenabschnitts (15') beginnt und der Radius der konvexen Oberfläche (18') von dem Ende (26) über wenigstens im wesentlichen 270° (D) zunimmt und anschließend der Finger (17') im wesentlichen linear von dem Nabenabschnitt weg führt.

11. Sternradabstreifer nach Anspruch 9 oder 10, bei dem die Innenfläche (20') des Fingers (17') im wesentlichen tangential zu dem Nabenabschnitt (15') verläuft.

12. Landwirtschaftliche Sortiervorrichtung nach einem der Ansprüche 1 bis 4, bei der die Sternradabstreifer (4) dem Anspruch in einem der Ansprüche 5 bis 11 entsprechen.

13. Erntemaschine, die eine landwirtschaftliche Sortiervorrichtung nach einem der Ansprüche 1 bis 4 oder Anspruch 12 aufweist.

## Revendications

1. Dispositif de séparation (séparateur) agricole comprenant un seul élément rotatif (2) comportant plusieurs roues-étoiles (3) montées sur un essieu rotatif, un rouleau brise-mottes (rouleau émotteur) à contre-rotation (5) agencé parallèlement au seul élément rotatif (2) et espacé de celui-ci pour établir une ligne de pincement (A) entre le rouleau brise-mottes (5) et l'élément rotatif (2) en vue de la séparation de matériau, et des racleurs de roues-étoiles (4) agencés sur les roues-étoiles (3).

2. Séparateur agricole selon la revendication 1, comportant plusieurs groupes dudit seul élément rotatif (2, 2', 2") et dudit rouleau brise-mottes respectif (5, 5', 5") agencés parallèlement les uns aux autres pour former une surface de transfert et de séparation (figure 1).

3. Séparateur agricole selon la revendication 2, comportant des moyens d'arrêt (7, 6, 6') pour limiter la rotation des racleurs de roues-étoiles (5).

4. Séparateur agricole selon la revendication 3, dans lequel chaque rouleau brise-mottes (5, 5', 5") comprend un racleur du rouleau brise-mottes, faisant fonction dudit moyen d'arrêt.

5. Racleur de roues-étoiles (4), comportant une partie de moyeu (15) avec une ouverture (16) la traversant, le racleur pouvant ainsi être monté sans serrage sur le moyeu (12) d'une roue-étoile (3), et un doigt (17) s'étendant à l'écart de la partie de moyeu (15), le racleur (4) comportant une surface convexe vers l'extérieur (18) avec un rayon de courbure (r₁, r₂, r₃) centré sur l'ouverture (16) et s'accroissant dans une direction entourant l'ouverture (16) en direction du doigt (17), de sorte qu'en service le racleur (4) exerce une pression progressivement accrue sur le matériau adhérant à la roue-étoile (3).

6. Racleur de roues-étoiles selon la revendication 5, formé à partir d'une matière plastique moulée.

7. Racleur de roues-étoiles selon les revendications 5 ou 6, dans lequel la partie de moyeu (15) a un diamètre pratiquement constant sur environ 180° de sa circonférence (AB), le rayon de la surface convexe étant ensuite accru sur environ 120° supplémentaires (BC), la surface externe du doigt s'étendant ensuite de façon pratiquement linéaire à l'écart de la partie de moyeu (15) sur les quelques 60° restants (CA) de la circonférence de la partie de moyeu (15).

8. Racleur de roues-étoiles selon l'une quelconque des revendications 5 à 7, dans lequel la surface interne (20) du doigt (17) s'étend de façon pratiquement radiale par rapport à la partie de moyeu (15).

9. Racleur de roues-étoiles selon les revendications 5 ou 6, dans lequel la partie de moyeu (15') comporte un espace périphérique (25), de sorte qu'une extrémité (26) de la partie de moyeu fait en service fonction de racleur de la partie de moyeu (14) de la roue-étoile (3) sur laquelle elle est montée.

10. Racleur de roues-étoiles selon la revendication 10, dans lequel la surface convexe (18') commence au niveau de ladite extrémité (26) de la partie de moyeu (15'), le rayon de la surface convexe (18') étant accru à partir de ladite extrémité (26) sur au moins environ 270° (D), le doigt (17') s'étendant ensuite de façon pratiquement linéaire à l'écart de la partie de moyeu.

11. Racleur de roues-étoiles selon les revendications 9 ou 10, dans lequel la surface interne (20') du doigt (17') s'étend de façon pratiquement tangentielle par rapport à la partie de moyeu (15').

12. Séparateur agricole selon l'une quelconque des revendications 1 à 4, dans lequel les racleurs de roues-étoiles (4) sont conformes à l'une quelconque des revendications 5 à 11.

13. Arracheuse comprenant un séparateur agricole selon l'une quelconque des revendications 1 à 4 ou 12.
